# EUROPÄISCHE PATENTSCHRIFT

(11) **EP 3 009 718 B1**
(45) Veröffentlichungstag und Bekanntmachung des Hinweises auf die Patenterteilung: **08.08.2018**
(21) Anmeldenummer: 15183099.9
(22) Anmeldetag: 31.08.2015
(51) Int. Cl.: F16K 11/07, F16K 31/06, B01D 35/00, B01D 29/00

(54) **CARTRIDGEVENTIL**
CARTRIDGE VALVE
VALVE EN CARTOUCHE

(30) Priorität: 14.10.2014 DE 102014114880
(43) Veröffentlichungstag der Anmeldung: 20.04.2016
(73) Patentinhaber: Hilite Germany GmbH, 97828 Marktheidenfeld (DE)
(72) Erfinder: Müller, Falk, 97080 Würzburg (DE); Fischer, Thorsten, 36399 Obermoos (DE)

(56) Entgegenhaltungen:
- JP-A- 2010 007 816
- JP-A- 2014 055 597
- US-A1- 2008 230 452

## Beschreibung

Die Erfindung betrifft ein Cartridgeventil gemäß dem Oberbegriff von Patentanspruch 1.

Aus der Patentschrift US 5 247 965 ist ein Cartridgeventil für ein Automatikgetriebe bekannt, das eine Hydraulikbuchse aufweist, die mehrere Anschlussöffnungen aufweist, welche als sich in Umfangsrichtung begrenzt erstreckende Langlöcher ausgeformt ist. Um zu verhindern, dass Fremdpartikel das Cartridgeventil festklemmen lassen, ist ein tieferer Bereich in der Hydraulikbuchse vorgesehen, an dem Fremdpartikel - wie Stahlpulver - aufgrund ihres Gewichts absinken. Das Cartridgeventil bietet sich für den lageorientierten Einbau an, da Langlöcher nicht gänzlich um den Umfang der Hydraulikbuchse umlaufen, so dass Bohrungen in einem das Cartridgeventil aufnehmenden Gehäuse direkt von dem Langloch abgehen können.

Aus der Patentschrift DE 195 10 647 C1 ist ein weiteres Cartridgeventil bekannt. Dieses Cartridgeventil weist zwei Versorgungsanschlüsse P, einen Arbeitsanschluss A und einen Tankanschluss T auf. In die Versorgungsanschlüsse P und den Arbeitsanschluss A sind jeweils Einsätze eingesetzt.

Die Patentschrift DE 10 2011 002 150 A1 zeigt bereits ein Cartridgeventil, das eine Hydraulikbuchse aufweist, die drei Anschlüsse P, A, B aufweist. Diese drei Anschlüsse sind als sich bezüglich einer Längsachse der Hydraulikbuchse in Umfangsrichtung begrenzt erstreckende Langlöcher ausgeformt. In diese Langlöcher sind Siebeinsätze eingesetzt. Die Siebeinsätze sind dabei entweder mit Hilfe vom am Siebeinsatz hakenförmig ausgebildeten Halteelemente im Langloch fixiert oder sie weisen ein Halteband auf, mittels dessen sie an der Hydraulikbuchse befestigt sind.

Aus der US 2008/0230452 A1 ist ein Hydraulikventil gemäß dem Oberbegriff des Patentanspruchs 1 bekannt. Ein wenigstens am Umfang plan ausgebildeter Siebeinsatz wird von einer offenen Seite des jeweiligen Langloches in eine das Langloch an drei Seiten umgebende, plane Nut geschoben, so dass ein gebogenes Ende des Siebeinsatzes an einer, an der offenen Seite des Langloches ausgebildeten Stufe der Hydraulikbuchse anliegt.

Aufgabe der Erfindung ist es, ein alternativ ausgebildetes axial kurzes Cartridgeventil zu schaffen, dass vor Fremdpartikeln geschützt ist.

Diese Aufgabe wird erfindungsgemäß mit den Merkmalen von Patentanspruch 1 gelöst.

Das erfindungsgemäße Cartridgeventil zeichnet sich dadurch aus, dass das Langloch sichelförmig vorgesehen und die Aufnahmenut im Bereich von Umfangsenden des Langlochs als Spalt mit einer Höhe zwischen einem in der Aufnahmenut ausgebildeten Absatz und einer dem Absatz gegenüberliegenden Deckzunge der Aufnahmenut ausgebildet ist, wobei der Siebeinsatz einem Radius des Langloches angepasst gebogen mit seiner an Haltezungen ausgebildeten Außenkante zumindest teilweise zwischen dem Absatz und der Deckzunge sich abstützend positionierbar ist, wobei eine Dicke der Haltzungen kleiner als die Höhe des Spaltes ausgebildet ist. Der Siebeinsatz ist somit zwischen dem Absatz und der Deckzunge einklemmbar. Mit anderen Worten weist das Langloch einen Hinterschnitt auf, in welchen der Siebeinsatz eingesetzt wird. Der Vorteil ist ein einfacher Einbau des Siebeinsatzes in der Hydraulikbuchse.

Vorteilhafterweise ist die Aufnahmenut, insbesondere in Form einer T-Nut, im Bereich von Umfangsenden des Langlochs ausgebildet ist. Dabei kann der sichelförmig ausgebildete Siebeinsatz während der Montage an seinen Längsenden Enden leicht, mit anderen Worten elastisch zusammengedrückt werden, so dass nach einer Positionierung im Langloch die beiden Enden jeweils, nach Lösung der aufgebrachten Spannung, zwischen dem Absatz und der Deckzunge angeordnet sind. Die T-Nut ist mit Hilfe eines so genannten T-Nut-Fräsers in die Hydraulikbuchse einzubringen.

In einer vorteilhaften Ausgestaltung weist der Siebeinsatz einen Rahmen und ein im Rahmen aufgenommenes dünnes Sieb auf. Der Vorteil besteht darin, dass der Rahmen im Allgemeinen aus einem Metall oder einem Kunststoff hergestellt wird und im Vergleich zum Sieb, welches ein Hydraulikfluid filternd innerhalb des Rahmens aufgespannt ist, aufgrund seiner relativ zum Sieb massiven Bauweise druck- und zugbelastbar ist.

Damit eine Schädigung des Siebes im Langloch vermieden wird, ist der Rahmen im Langloch festgelegt. Der Vorteil ist, dass das Sieb im Langloch bei einer Belastung durch das Hydraulikfluid radial frei bewegbar ist, ohne aufgrund einer Wechselbelastung durch eine Änderung der Strömungsrichtung und/oder Massenkraft des Hydraulikfluids infolge eines Scheuern an Kanten des Langlochs Schädigungen bspw. Rissbildungen ausgesetzt zu sein. Dies führt zu einer verbesserten Lebensdauer des erfindungsgemäßen Cartridgeventils. Mit anderen Worten ist der Rahmen im Langloch festgelegt zur Reduzierung einer Schädigung des Siebes.

An Umfangsenden des Langlochs zugewandt positionierbare Rahmenenden des Rahmens ist jeweils eine Haltezunge ausgebildet. Dies führt zu einer verbesserten Handhabung des Siebeinsatzes und zu einem weiteren verbesserten Schutz des Siebes vor einer Schädigung.

In einer weiteren verbesserten Ausgestaltung ist ein Absatz im Langloch an dessen Längsseiten vorgesehen, auf den der Siebeinsatz aufgesetzt ist. Dies verhindert eine Durchbiegung des Siebeinsatzes im Betrieb des Cartridgeventils und vermindert somit eine Riss- und/oder Bruchgefahr des Siebeinsatzes, so dass eine weitere Verbesserung der Lebensdauer des Cartridgeventils herbeigeführt ist.

Der Absatz der Aufnahmenut geht in den Absatz der Längsseiten über, wobei der Absatz im Langloch umlaufend geschlossen ist. Dies ist einfach herstellbar mit Hilfe eines Fräsverfahrens.

Der Rahmen ist bevorzugt ein Kunststoffspritzgussteil, von welchem das Sieb an seiner Umfangskante 25 umspritzt ist. Somit ist aufgrund einer einfachen Umspritzkontur des Siebes vorteilhaft ein einfaches Siebeinsatzdesign realisierbar.

In einer weiteren Ausgestaltung des erfindungsgemäßen Cartridgeventils erstreckt sich vom Rahmen radial nach außen zumindest ein Positionshalterungssteg radial nach außen zur Sicherung einer axialen Positionierung des Siebeinsatzes in der Hydraulikbuchse und dient als Positionierhilfe während der Montage.

Zur weiteren gesicherten Fixierung des Siebeinsatzes im Langloch ist zumindest eine Klemmlasche am Rahmen ausgebildet, welche sich vom Rahmen ausgehend parallel zur Längsachse erstreckt. Zur Aufnahme der Klemmlasche im Langloch ist an dessen Längsseiten jeweils die Aufnahmenut ausgebildet. Die Klemmlasche kann dabei vollständig entlang der komplementär zur Längsachse des Langlochs ausgebildeten Rahmenlängsachse sein. Allerdings ist es zur gesicherten Halterung des Siebeinsatzes ausreichend abschnittsweise an der Rahmenlängsachse Klemmlaschen vorzusehen.

In besonders vorteilhafter Weise kann dabei die Hydraulikbuchse des Cartridgeventils in einem aufnehmenden Gehäuse lageorientiert eingebaut sein. Das ermöglicht eine axial sehr kurze Bauweise, wenn mehrere bezüglich einer Längsachse der Hydraulikbuchse axial aufeinander folgende Langlöcher im Umfang versetzt zueinander angeordnet sind.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Gleichen oder funktionsgleichen Elementen sind identische Bezugszeichen zugeordnet. Aus Gründen der Übersichtlichkeit ist es möglich, dass die Elemente nicht in allen Figuren mit ihrem Bezugszeichen versehen sind, ohne jedoch ihre Zuordnung zu verlieren. Es zeigen:
Fig. 1 in einer geschnittenen Darstellung ein elektromagnetisches Hydraulikventil mit einer Hydraulikbuchse,
Fig. 2 eine Hydraulikbuchse in einer Sicht auf zwei Arbeitsanschlüsse mit je einem Siebeinsatz eines elektromagnetischen Hydraulikventils in einem ersten Ausführungsbeispiel,
Fig. 3 in einem Schnitt entlang der Schnittlinie III-III die Hydraulikbuchse des Hydraulikventils gem. Fig. 1,
Fig. 4 in einer perspektivischen Ansicht die Hydraulikbuchse des Hydraulikventils gem. Fig. 2 ohne Siebeinsatz,
Fig. 5 in einer perspektivischen Ansicht der Siebeinsatz des Hydraulikventils gem. Fig. 2,
Fig. 6 in einer Unteransicht die Hydraulikbuchse eines elektromagnetischen Hydraulikventils in einer zweiten Ausführungsform,
Fig. 7 in einem Längsschnitt ein Ausschnitt der Hydraulikbuchse im Bereich des Siebeinsatzes des Hydraulikventils gem. Fig. 6,
Fig. 8 in einer Detailansicht der Siebeinsatz der Hydraulikbuchse des Hydraulikventils gem. Fig. 6,
Fig. 9 in einer perspektivischen Ansicht die Hydraulikbuchse ohne Siebeinsatz des Hydraulikventils gem. Fig. 6,
Fig. 10 in einer perspektivischen Ansicht der Siebeinsatz des Hydraulikventils gem. Fig. 6,
Fig. 11 in einer Unteransicht die Hydraulikbuchse eines elektromagnetischen Hydraulikventils in einer dritten Ausführungsform,
Fig. 12 in einer Detailansicht der Siebeinsatz des Hydraulikventils gem. Fig. 11,
Fig. 13 in einem Längsschnitt ein Ausschnitt der Hydraulikbuchse im Bereich des Siebeinsatzes des Hydraulikventils gem. Fig. 11,
Fig. 14 in einer perspektivischen Ansicht die Hydraulikbuchse ohne Siebeinsatz des Hydraulikventils gem. Fig. 11, und
Fig. 15 in einer perspektivischen Ansicht der Siebeinsatz des Hydraulikventils gem. Fig. 11.

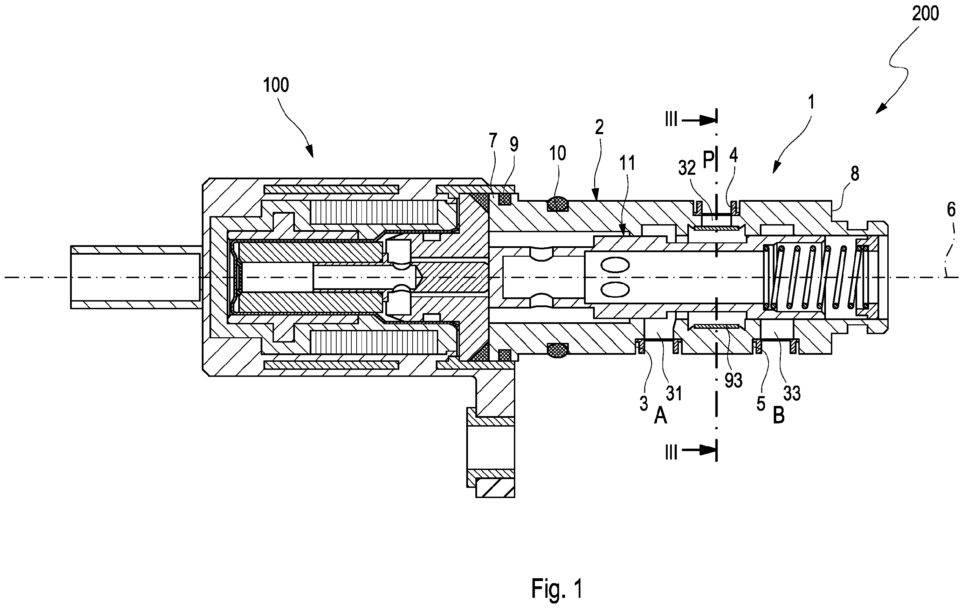

Fig. 1 zeigt ein elektromagnetisches Cartridgeventil 200 mit einem Hydraulikglied 1. Dieses Hydraulikglied 1 umfasst eine Hydraulikbuchse 2 mit umfangsmäßig ausgerichteten Langlöchern, einem ersten Langloch 3, einem zweiten Langloch 4 und einem dritten Langloch 5. Diese drei Langlöcher 3, 4, 5 sind bezüglich einer Längsachse 6 der Hydraulikbuchse 2 axial aufeinanderfolgend angeordnet. Die Hydraulikbuchse 2 weist dabei an ihrem einem elektromagnetischen Stellglied 100 nahe stehenden Ende einen ringförmigen Ansatz 7 auf, der sich radial nach außen erstreckt. An dem anderen Ende ist die Hydraulikbuchse 2 mittels eines Gehäuseabsatzes 8 im Durchmesser verringert. Das erstgenannte Ende weist am ringförmigen Ansatz 7 eine umlaufende Ringnut 9 auf. Zwischen diesem ringförmigen Ansatz 7 und den Langlöchern 3, 4, 5 ist eine umlaufende weitere Ringnut 10 vorgesehen, in die ein O-Ring eingesetzt ist, der Anschlüsse nach außen hin zu einem nicht näher dargestellten Gehäuse abdichtet.

Ein Anschluss ist ein Versorgungsanschluss P, der bezüglich der Längsachse 6 axial mittig zwischen zwei Arbeitsanschlüssen A, B angeordnet ist. Diese beiden Arbeitsanschlüsse A, B sind bezüglich der Längsache 6 auf der dem Versorgungsanschluss P gegenüber liegenden Seite der Hydraulikbuchse 2 angeordnet.

Der Versorgungsanschluss P dient der Versorgung des Hydraulikteils 1 mit einem Hydraulikfluid. Die beiden Arbeitsanschlüsse A, B sind mit Kammern einer hydraulikgesteuerten Vorrichtung, bspw. einen Schwenkmotorversteller einer Nockenwelle hydraulisch verbindbar. Der Positionierung eines in der Hydraulikbuchse 2 axial bewegbar aufgenommenen Kolbens 11 entsprechend, sind die Arbeitsanschlüsse A, B entweder gesperrt, vollständig oder teilweise freigegeben, wobei mittels des Kolbens 11 den Langlöchern 3, 4, 5 zugeordnete, in der Hydraulikbuchse 2 ausgebildete Kanäle, ein dem ersten Langloch 3 zugeordneter erster Kanal 31, ein dem zweiten Langloch 4 zugeordneter zweiter Kanal 32 und ein dem dritten Langloch 5 zugeordneter dritter Kanal 33, zur Beaufschlagung mit dem Hydraulikfluid entsprechend gesperrt, vollständig oder teilweise freigegeben werden.

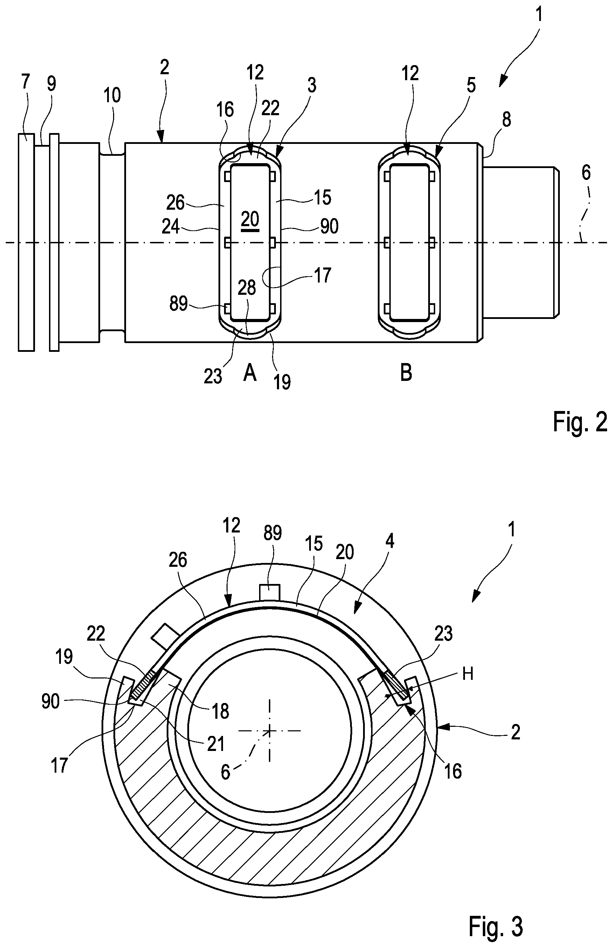

In Fig. 2 ist die Hydraulikbuchse 2 in einer Sicht auf die beiden Arbeitsanschlüsse A, B dargestellt. Im ersten Langloch 3 und im dritten Langloch 5 ist jeweils ein mit dem Siebeinsatz 12 des zweiten Langlochs 4 baugleicher Siebeinsatz 12 angeordnet. Da die Siebeinsätze 12 der drei Langlöcher 3, 4, 5, sowie die drei Langlöcher 3, 4, 5 baugleich sind, wird im Folgenden nur ein Siebeinsatz bzw. ein Langloch detailliert erläutert.

Fig. 3 zeigt die Hydraulikbuchse 2 in einem Schnitt entlang der Schnittlinie III-III, wie sie in Fig. 1 eingezeichnet ist. Der Schnitt verläuft dabei durch den Siebeinsatz 12, welcher in das zweite Langloch 4 des Versorgungsanschlusses P eingesetzt ist. In gleicher Weise sind die Siebeinsätze 12 in den Langlöchern 3, 5 der beiden Arbeitsanschlüsse A, B eingesetzt.

Der Siebeinsatz 12 umfasst einen geschlossen umlaufenden Rahmen 15 aus Kunststoff. Der Rahmen 15 weist eine rechteckformartige, abgerundete Eckkanten aufweisende Grundgeometrie auf, welche aufgrund der Hülsenform des Hydraulikbuchse 2 einem Radius im Bereich des Langlochs 4 der Hydraulikbuchse 2 angepasst gebogen ist. Je nach gewähltem Material des Rahmens 15 erhält der Rahmen 15 die Biegung erst nach einem Einlegen des Siebeinsatzes 12 in die Hydraulikbuchse 2 oder bereits bei der Herstellung des Rahmens 15.

Damit der Siebeinsatz 12 im Langloch 4 unverlierbar platziert ist, weist das Langloch 4 eine Aufnahmenut 16 auf, in die der Rahmen 15 aufgenommen ist. Der Rahmen 15 ist in die Aufnahmenut 16 eingefügt, und liegt zum einen an der Innenkante 17 des Langlochs 4, zum anderen liegt er zwischen einem Absatz 18 des Langlochs 4 bzw. der Aufnahmenut 16 auf und stützt sich, insbesondere mit einer Außenkante 90 an einer dem Absatz 18 radial gegenüberliegende Deckzunge 19 der Aufnahmenut 16 ab.

Die Aufnahmenut 16 ist im vorliegenden ersten Ausführungsbeispiel nur im Bereich der bogenförmig ausgebildeten Enden des Langlochs 4 ausgebildet. Ebenso könnte sie über den vollständigen Umfang des zweiten Langlochs 4, also auch an Längsseiten 24 des Langlochs 4 ausgebildet sein.

Innerhalb des Rahmens 15 ist ein dünnes Sieb 20 angeordnet, welches beim Spritzvorgang des Rahmens 15 in die Form eingelegt wurde. Das Sieb 20 ist in diesem Ausführungsbeispiel als Siebgewebe ausgeführt. Alternativ kann das Sieb 20 wie nachstehend beschrieben als ein geätztes oder gestanztes dünnes Blech ausgeführt sein.

Das Sieb 20 ist an dessen Umfangskante 25 vom Kunststoff des Rahmens 15 umspritzt. An den beiden Enden des jeweiligen Siebeinsatzes 12 sind Haltezungen, eine erste Haltezunge 22 und eine zweite Haltezunge 23, vorgesehen, die zwischen dem Absatz 18 und der Deckzunge 19 angeordnet sind.

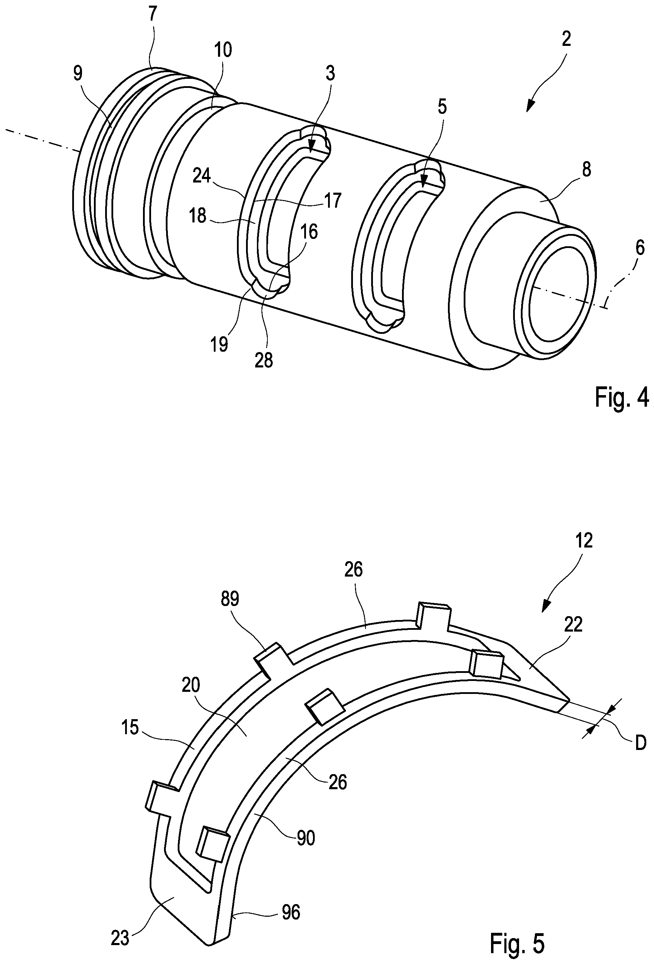

Fig. 4 zeigt in einer perspektivischen Ansicht die Hydraulikbuchse 2 des ersten Ausführungsbeispiels ohne Siebeinsatz 12. Die Enden des Langlochs 4, in die die Haltezungen 22, 23 angeordnet sind, weisen jeweils Einbuchtungen 28 auf, die einer Positionierung des Siebeinsatzes 12 in der Montage des Cartridgeventils 200 dienen.

Fig. 5 zeigt den Siebeinsatz 12 des ersten Ausführungsbeispiels in einer perspektivischen Ansicht. Am Umfang des Rahmens 15 sind Positionshalterungsstege 89 ausgebildet. Die Positionshalterungsstege 89 sind an den Längsseiten des Rahmens 15 bzw. den Rahmenlängsseiten 26 in regelmäßigen Abständen angeordnet und dienen einer axialen Positionierung des Siebeinsatzes 12 im Betrieb des Cartridgeventils 200 und weisen einen einfachen rechteckförmigen Querschnitt auf. Die Positionierungsstege 89 sind in der Hydraulikbuchse 2 vom Kolben 11 abgewandt, somit dem entsprechenden Anschluss zugewandt positioniert.

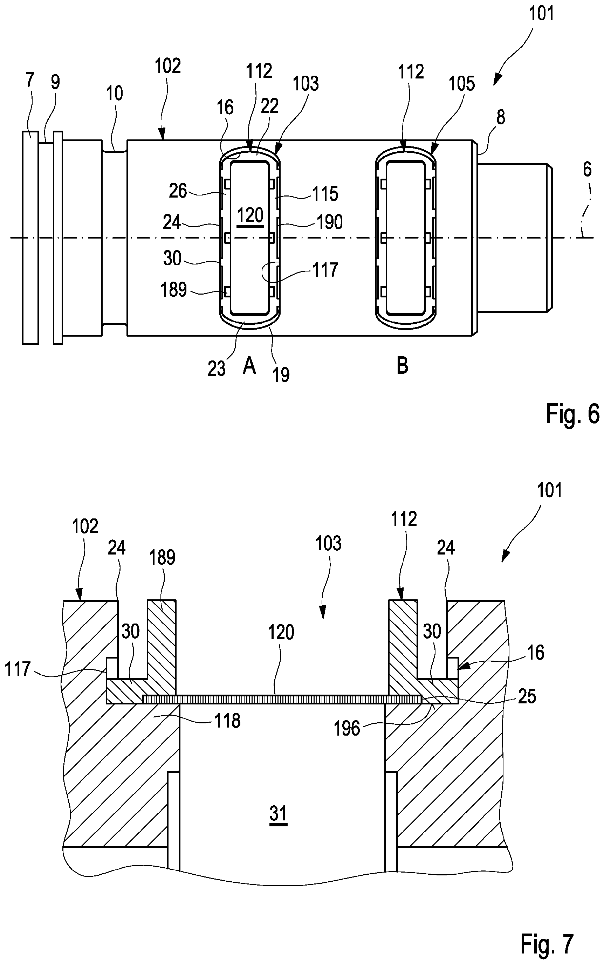

Fig. 6 zeigt ein Hydraulikglied 101 einer zweiten Ausführungsform des Cartridgeventils 200. Dieses Hydraulikglied 101 unterscheidet sich vorrangig durch die Ausführung der drei Siebeinsätze 112 von dem Hydraulikglied 1, von denen im Folgenden nur auf den Siebeinsatz 112 bzw. das Langloch 103 des Arbeitsanschlusses A eingegangen wird, da die drei Siebeinsätze 112 bzw. die Langlöcher 103, 104, 105 baugleich ausgeführt sind. Der Siebeinsatz 112 besteht aus einem Sieb 120, welches in einen Rahmen 115 aus Metall montiert ist.

Das Sieb 120 ist in diesem Fall wieder als Siebgewebe ausgeführt, kann jedoch wie nachstehend beschrieben auch vorteilhafterweise als geätztes oder gestanztes Blech vorgesehen sein. Im Montageprozess des Cartridgeventils 200 wird der Siebeinsatz 112 vorgebogen, in das entsprechende Langloch, hier das erste Langloch 103 der Hydraulikbuchse 102 eingesetzt, wobei die Haltezungen 22, 23 in ein zwischen dem Absatz 118 und der Deckzunge 19 ausgebildeten Spalt 21 gesteckt wird.

Der Rahmen 115 weist an seinen Rahmenlängsseiten 26 die Positionshalterungsstege 189 und auch relativ zu den Positionshalterungsstegen 189 axial versetzte Klemmlaschen 30 auf, wobei die Klemmlaschen 30 an der Außenkante 190 des Rahmens 115 angeordnet sind. Die Klemmlaschen 30 erstrecken sich in ihrer Längsausdehnung L1 nicht vollständig über den Umfang des Siebeinsatzes 112, sondern erstrecken sich nur abschnittsweise über diesen, was zur Fixierung und somit zur Halterung des Siebeinsatzes 112 in der Hydraulikbuchse 102 ausreichend ist.

Das erste Langloch 103 weist die Aufnahmenut 16 nicht nur im Bereich ihrer Enden zum Verklemmen der ersten Haltezunge 22 und der zweiten Haltezunge 23 auf, sondern auch entlang ihrer Längsseiten 24. Der Siebeinsatz 112 ist mit einer Unterfläche 196 des Rahmens 115 auf dem Absatz 118 aufliegend und mit seiner Außenkante 190 in die Aufnahmenut 16 eingeklemmt angeordnet, wobei eine formschlüssige Verbindung zwischen dem Rahmen 115 und der Aufnahmenut 16 ausgebildet ist. Mit anderen Worten ist in diesem Ausführungsbeispiel der Rahmen 115 an seiner Außenkante 190 des Siebeinsatzes 112 eingeklemmt. Der Absatz 118 im Bereich der Längsseite 24 muss in seiner Dimensionierung nicht zwingend mit dem Absatz 118 im Bereich der Enden des ersten Langlochs 103 übereinstimmen.

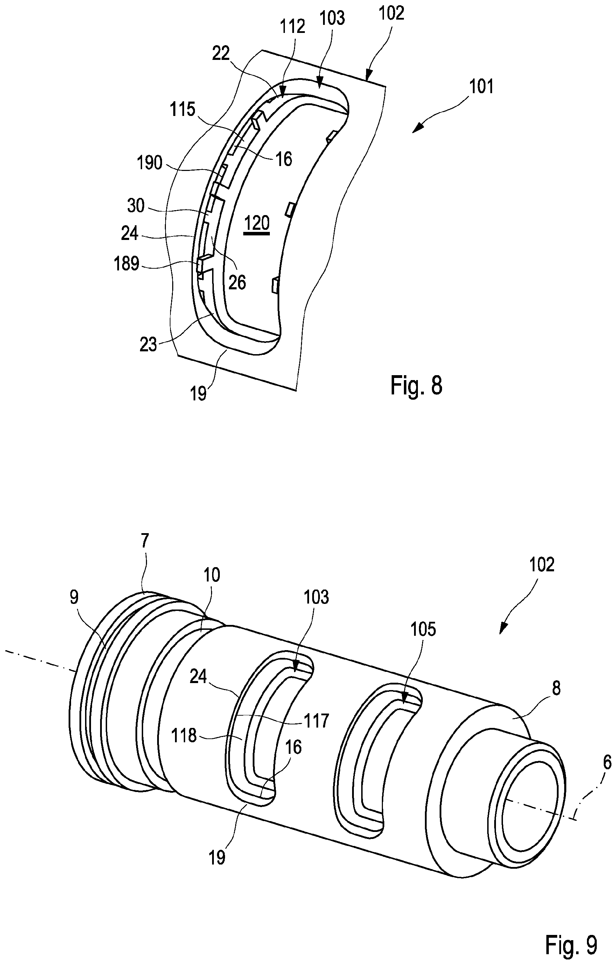

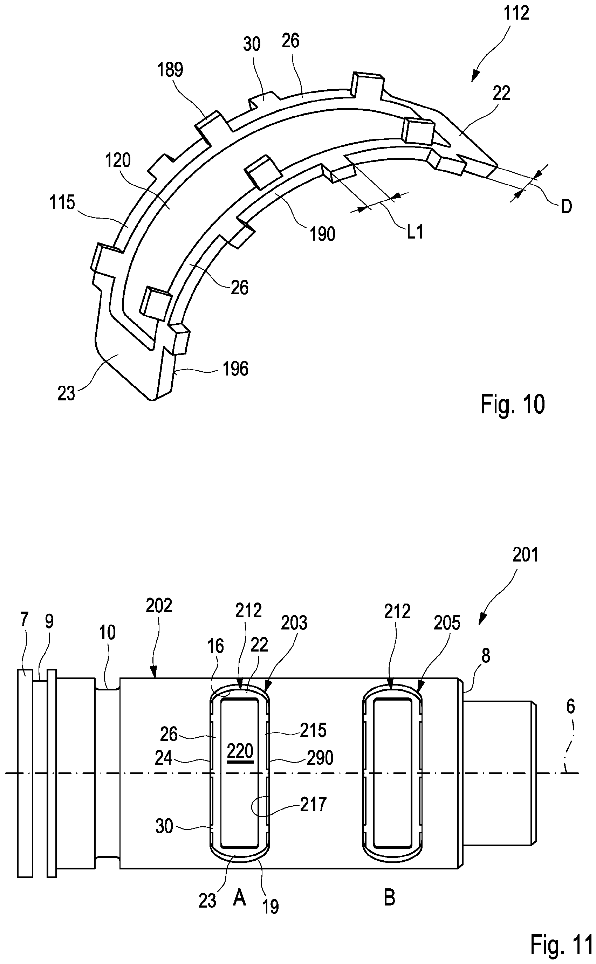

In Fig. 8 ist ein Ausschnitt des Hydraulikgliedes 101 im Bereich des ersten Langlochs 103 zur detaillierten Ansicht des Siebeinsatzes 112 im ersten Langloch 103 dargestellt, wobei der Siebeinsatz 112 in Fig. 10 in einer perspektivischen Darstellung gezeigt ist.

Fig. 9 zeigt die Hydraulikbuchse 102 des zweiten Ausführungsbeispiels ohne Siebeinsatz 112. Im Vergleich zur Hydraulikbuchse 2 des ersten Ausführungsbeispiels ist eine Innenkante 117 des Langlochs 103 in einem zur Mantelfläche der Hydraulikbuchse 102 variierenden Abstand ausgebildet, wobei im Bereich der Aufnahmenut 16 zur Aufnahme der Haltezungen 22, 23 ein größter Abstand ausgebildet ist.

Fig. 11 zeigt eine dritte Ausführungsform. Das Hydraulikglied 201 unterscheidet sich vorrangig durch die Ausführung der drei identischen Siebeinsätze bzw. der identischen Langlöcher 203, 204, 205, von denen wieder nur ein Siebeinsatz 212 bzw. ein Langloch 203 näher erläutert wird.

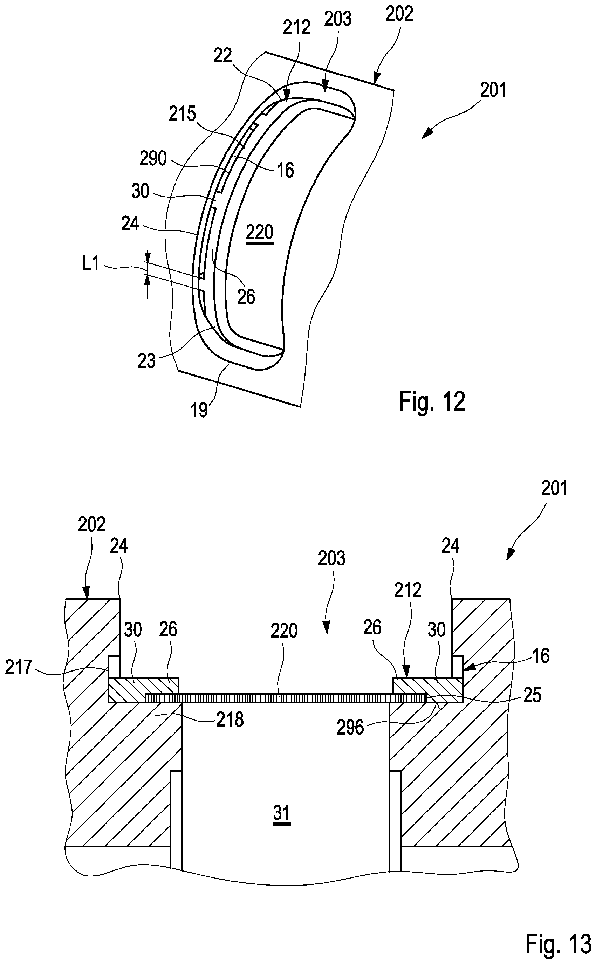

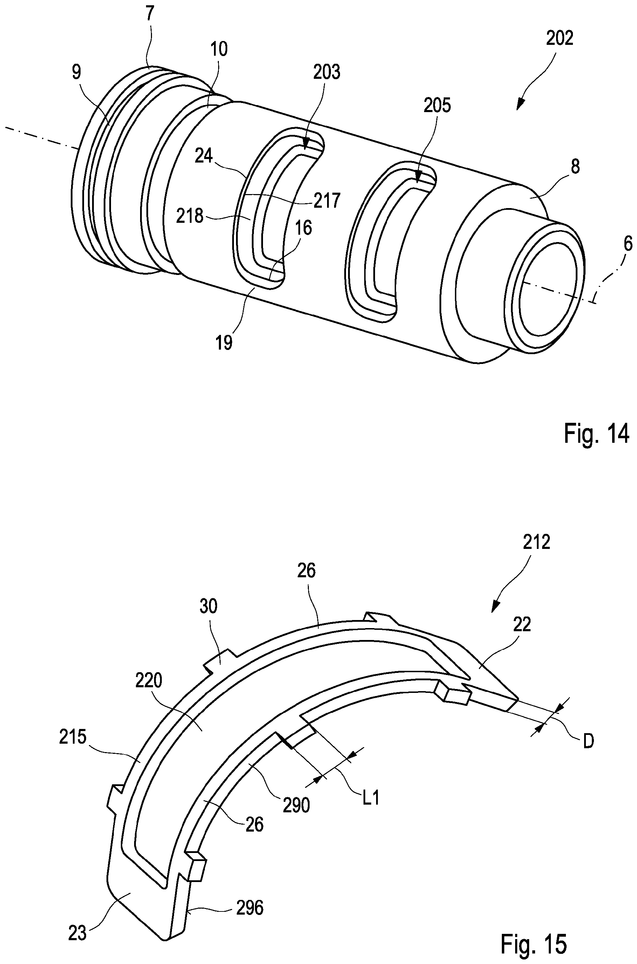

Die Figuren 12 und 15 zeigen eine perspektivische Ansicht des Siebeinsatzes 212 der dritten Ausführungsform. In Fig. 13 ist der Siebeinsatz 212 in einem Schnitt entlang der Längsachse 6 dargestellt. Fig. 14 zeigt die zur Aufnahme der Siebeinsätze 212 ausgebildete Hydraulikbuchse 202 in einer perspektivischen Ansicht.

Der Rahmen 215 des Siebeinsatzes 212 weist an seinen den Längsseiten 24 zugewandt ausgebildeten Seiten ebenfalls Klemmlaschen 30 auf, welche in der, in diesem Ausführungsbeispiel ebenfalls über den gesamten Umfang sich erstreckende Aufnahmenut 16 des ersten Langlochs 203 eingeklemmt sind, wobei die Klemmlaschen 30 an der Außenkante 290 des Rahmens 215 angeordnet sind. Die Klemmlaschen 30 erstrecken sich in ihrer Längsausdehnung L1 nicht vollständig über den Umfang des Siebeinsatzes 212, sondern erstrecken sich nur abschnittsweise über die Rahmenlängsseiten 26, was zur Fixierung und somit zur Halterung des Siebeinsatzes 212 in der Hydraulikbuchse 202 ausreichend ist.

Der Siebeinsatz 212 ist mit einer Unterfläche 296 des Rahmens 215 auf dem Absatz 218 aufliegend und mit seiner Außenkante 290 in die Aufnahmenut 16 eingeklemmt angeordnet, wobei eine formschlüssige Verbindung zwischen dem Rahmen 215 und der Aufnahmenut 16 ausgebildet ist. Die Haltezungen 22, 23 werden im jeweiligen Endbereich des ersten Langlochs 203 zur weiteren gesicherten Positionierung des Siebeinsatzes 212 im ersten Langloch 203 in der dort ausgebildeten Aufnahmenut 16 aufgenommen ist, wobei in diesen Endbereichen das erste Langloch 203 die dem Absatz 218 gegenüberliegende Deckzunge 19 aufweist. Somit ist der Rahmen 215 in die Aufnahmenut 16 eingefügt, und liegt an der Innenkante 217 des ersten Langlochs 203 an, wobei er auf dem Absatz 218 des ersten Langlochs 203 aufliegt und sich an einer dem Absatz 218 radial gegenüberliegende Deckzunge 219 der Aufnahmenut 16 abstützt.

In allen Ausführungsbeispielen ist eine Dicke D der Haltezungen 22, 23 so groß gewählt, dass ein zwischen der Deckzunge 19 und dem Absatz 18 bzw. 118 bzw. 218 ausgebildeter Spalt 21 eine gerade so große Spalthöhe H aufweist, dass die Haltezungen 22, 23 mit Hilfe einer Haftreibung formschlüssig zwischen der Deckzunge und dem Absatz 18 bzw. 118 bzw. 218 fixiert sind.

Der Rahmen 15, 115, 215 kann wie auch das Sieb 20, 120, 220 aus einem Metall, insbesondere ein Stahl oder ein Aluminium, bevorzugt korrespondierend zum Material der Hydraulikbuchse 2, 102, 202 ausgebildet sein. Ebenso kann der Siebeinsatz 12, 112, 212 zusätzlich am entsprechenden Langloch mit Hilfe einer stoffschlüssigen Verbindung, insbesondere Schweißverbindung fixiert sein. Sofern der Rahmen 15, 115, 215 aus einem Kunststoff ausgebildet ist, ist ein Klebemittel zu bevorzugen.

Das Sieb 20, 120, 220 kann sowohl ein metallisches Gewebe als auch ein Kunststoffgewebe sein. Ein Kunststoffgewebe hat dabei eine entsprechende Maschenweite.

Um ein besonders robustes Sieb 20, 120, 220 zu erhalten, ist es ferner vorteilhafterweise denkbar, das Sieb 20, 120, 220 als ein geätztes oder gestanztes dünnes Blech auszuführen.

Das aus einem Blech ausgebildete Sieb 20, 120, 220 ist im Vergleich zu einem Draht- oder Siebgewebe robuster, so dass Beschädigungen durch hohe Volumenströme, welche mit entsprechendem Druck und entsprechender Geschwindigkeit auf das Sieb 20, 120, 220 auftreffen, ausgeschlossen werden können. Wenn Sieböffnungen durch Ätzen hergestellt werden, können diese entsprechend den speziellen Funktionsanforderungen der jeweiligen Ventile gezielt dargestellt und optimiert werden. So ist es beispielsweise denkbar, die Sieböffnungen als Blenden auszubilden, so dass ein temperaturunabhängiger und gezielter Druckabfall bei der Durchströmung des Siebes 20, 120, 220 erzielt werden kann.

In einem weiteren nicht näher dargestellten Ausführungsbeispiel weist der Siebeinsatz 12 ein einstückig mit dem Rahmen 15 ausgebildetes Sieb 20 auf. Das Sieb 20 in Form eines Siebgewebes besitzt einen umlaufenden Rand in Form des Rahmens, welcher durch Pressen soweit verfestigt ist, dass sich das Siebgewebe nicht Öffnen kann, d.h. mit anderen Worten am Rand nicht durchlässig ist wie im übrigen Bereich des Siebeinsatzes 12. Der Rahmen 15 entspricht diesem ausgebildeten Rand.

Ein solches am Rand verfestigtes Siebgewebe 20 wird auch als Vollmetallsieb bezeichnet. Der Siebeinsatz 12 wird in das erste Langloch 3 der Hydraulikbuchse 2 eingelegt. Im Anschluss wird der Rand 15 des Siebeinsatzes 12 direkt an der Hydraulikbuchse 2 angeschweißt. Die Materialpaarung von der Hydraulikbuchse 2 und dem Siebeinsatz 12 muss entsprechend der Schweißbarkeit ausgewählt werden. Insbesondere ist gleichartiges Material schweißbar. Beispielsweise kann sowohl die Hydraulikbuchse 2 als auch der Siebeinsatz 12 aus Aluminium gefertigt sein.

Der Siebeinsatz 12 kann an verschiedenen umfangsmäßigen Stellen auf dem Absatz 18 im Langloch 3 angeschweißt werden, wobei die Schweißpunkte bevorzugt gleichmäßig am Umfang des Randes 15 verteilt sind. Es ist jedoch auch möglich, die Schweißpunkte spannungsoptimiert oder hinsichtlich der Dichtheit optimiert an der Hydraulikbuchse 2 anzuschweißen.

Das erfindungsgemäße Cartridgeventil 200 weist ein Rückschlagventil 93 auf, s. Fig.1, welches gemeinsam mit dem Siebeinsatz 12 im zweiten Langloch 4 angeordnet ist. Mit anderen Worten können unabhängig auf den unterschiedlich ausgebildeten Siebeinsätzen 12, 112, 212 diese gemeinsam mit einem Rückschlagventil 93 in einem entsprechenden Kanal 31, 32, 33 angeordnet sein. Bei den beschriebenen Ausführungsformen handelt es sich nur um beispielhafte Ausgestaltungen. Weitere, insbesondere nicht beschriebene Merkmale der zur Erfindung gehörenden Vorrichtungsteile, sind den in den Zeichnungen dargestellten Geometrien der Vorrichtungsteile zu entnehmen.

### Bezugszeichenliste

- 1, 101, 201: Hydraulikglied
- 2, 102, 202: Hydraulikbuchse
- 3, 103, 203: erstes Langloch
- 4, 104, 204: zweites Langloch
- 5, 105, 205: drittes Langloch
- 6: Längsachse
- 7: Ansatz
- 8: Gehäuseabsatz
- 9: Ringnut
- 10: weitere Ringnut
- 11: Kolben
- 12, 112, 212: Siebeinsatz
- 15, 115, 215: Rahmen
- 16: Aufnahmenut
- 17, 117, 217: Innenkante
- 18, 118, 218: Absatz
- 19: Deckzunge
- 20, 120, 220: dünnes Sieb
- 21: Spalt
- 22: erste Haltezunge
- 23: zweite Haltezunge
- 24: Längsseite
- 25: Umfangskante
- 26: Rahmenlängsseite
- 28: Einbuchtung
- 30: Klemmlasche
- 31: erster Kanal
- 32: zweiter Kanal
- 33: dritter Kanal
- 89, 189, 289: Positionshalterungssteg
- 90, 190, 290: Außenkante
- 91: Innenlängskante
- 92: Ausnehmung
- 93: Rückschlagventil
- 96, 196, 296: Innenseite / Unterfläche
- 100: Stellglied
- 200: Cartridgeventil
- A: Arbeitsanschluss
- B: Hydraulikanschluss
- D: Dicke
- L1: Längsausdehnung (115)
- P: Hydraulikanschluss

## Patentansprüche

1. Cartridgeventil, das eine Hydraulikbuchse (2; 102; 202) aufweist, die zumindest einen Anschluss (P bzw. A bzw. B) aufweist, welcher als sich bezüglich einer Längsachse (6) der Hydraulikbuchse (2; 102; 202) in Umfangsrichtung begrenzt erstreckendes Langloch (3, 103, 203; 4, 104, 204; 5, 105, 205) ausgeformt ist und welcher mittels eines in das Langloch (3, 103, 203; 4, 104, 204; 5, 105, 205) eingesetzten Siebeinsatzes (12; 112; 212) geschützt ist, wobei das Langloch (3, 103, 203; 4, 104, 204; 5, 105, 205) eine zumindest teilweise über den Umfang des Langlochs (3, 103, 203; 4, 104, 204; 5, 105, 205) ausgebildete Aufnahmenut (16) aufweist, **dadurch gekennzeichnet, dass** das Langloch (3, 103, 203; 4, 104, 204; 5, 105, 205) sichelförmig vorgesehen und die Aufnahmenut (16) jeweils im Bereich von Umfangsenden des Langlochs (3, 103, 203; 4, 104, 204; 5, 105, 205) als Spalt (21) mit einer Höhe (H) zwischen einem in der Aufnahmenut (16) ausgebildeten Absatz (18; 118; 218) und einer dem Absatz (18; 118; 218) gegenüberliegenden Deckzunge (19) der Aufnahmenut (16) ausgebildet ist, wobei der Siebeinsatz (12; 112; 212) einem Radius des Langloches (3, 103, 203; 4, 104, 204; 5, 105, 205) angepasst gebogen mit seiner an umfänglich endseitigen Haltezungen (22, 23) ausgebildeten Außenkante (90; 190; 290) zumindest teilweise zwischen dem Absatz (18; 118; 218) und der Deckzunge (19) sich abstützend positionierbar ist, wobei eine Dicke (D) der Haltezungen (22, 23) kleiner als die Höhe (H) des Spaltes (21) ausgebildet ist, so dass die Haltezungen (22, 23) mit Hilfe einer Haftreibung formschlüssig zwischen der Deckzunge (19) und dem Absatz (18; 118; 218) fixiert sind.

2. Cartridgeventil nach Patentanspruch 1,
**dadurch gekennzeichnet, dass**
die Aufnahmenut (16) als T-Nut ausgeführt ist.

3. Cartridgeventil nach einem der vorhergehenden Patentansprüche,
**dadurch gekennzeichnet, dass**
der Siebeinsatz (12; 112; 212) einen Rahmen (15; 115; 215) und ein im Rahmen aufgenommenes dünnes Sieb (20; 120; 220) aufweist.

4. Cartridgeventil nach Patentanspruch 3,
**dadurch gekennzeichnet, dass**
der Rahmen (15; 115; 215) im Langloch (3, 103, 203; 4, 104, 204; 5 105, 205) festgelegt ist.

5. Cartridgeventil nach einem der Patentansprüche 3 oder 4,
**dadurch gekennzeichnet, dass**
der Rahmen (15; 115; 215) an seinen den Umfangsenden des Langlochs (3, 103, 203; 4, 104, 204; 5 105, 205) zugewandt positionierbaren Rahmenenden jeweils die Haltezunge (22, 23) aufweist.

6. Cartridgeventil nach einem der Patentansprüche 3 bis 5,
**dadurch gekennzeichnet, dass**
das Sieb als geätztes oder gestanztes Blech ausgebildet ist.

7. Cartridgeventil nach einem der vorhergehenden Patentansprüche,
**dadurch gekennzeichnet, dass**
der Absatz (18; 118; 218) zusätzlich an Längsseiten (24) des Langlochs (3, 103, 203; 4, 104, 204; 5 105, 205) vorgesehen ist, auf den der Siebeinsatz (12; 112; 212) aufgesetzt ist.

8. Cartridgeventil nach einem der vorherigen Patentansprüche,
**dadurch gekennzeichnet, dass**
der Absatz (18; 118; 218) geschlossen umlaufend ist.

9. Cartridgeventil nach einem der Patentansprüche 3 bis 8, **dadurch gekennzeichnet, dass**
der Rahmen (15; 115; 215) ein Kunststoffspritzgussteil ist, von welchem das Sieb (20; 120; 220) an dessen Außenkante (90; 190; 290) umspritzt ist.

10. Cartridgeventil nach einem der Patentansprüche 3 bis 9,
**dadurch gekennzeichnet, dass**
sich vom Rahmen (15; 115) zumindest ein Positionshalterungssteg (89; 189) radial nach außen erstreckt.

11. Cartridgeventil nach einem der Patentansprüche 3 bis 9,
**dadurch gekennzeichnet, dass**
sich vom Rahmen (115; 215) zumindest eine Klemmlasche (30) parallel zur Längsachse (6) erstreckt.

12. Cartridgeventil nach einem der vorhergehenden Patentansprüche,
**dadurch gekennzeichnet, dass**
mehrere bezüglich der Längsachse (6) der Hydraulikbuchse (2; 102; 202) axial aufeinander folgende Langlöcher (3, 4, 5; 103, 104, 105; 203, 204, 205) im Umfang der Hydraulikbuchse (2; 102; 202) versetzt zueinander angeordnet sind.

## Claims

1. Cartridge valve which has a hydraulic sleeve (2; 102; 202) which has at least one port (P or A or B) which is formed as an elongate hole (3, 103, 203; 4, 104, 204; 5, 105, 205) extending in a limited manner in the peripheral direction with respect to a longitudinal axis (6) of the hydraulic sleeve (2; 102; 202) and which is protected by means of a screen insert (12; 112; 212) inserted into the elongate hole (3, 103, 203; 4, 104, 204; 5, 105, 205), wherein the elongate hole (3, 103, 203; 4, 104, 204; 5, 105, 205) has a receiving groove (16) which is formed at least partially over the periphery of the elongate hole (3, 103, 203; 4, 104, 204; 5, 105, 205), **characterized in that** the elongate hole (3, 103, 203; 4, 104, 204; 5, 105, 205) is provided so as to be sickle-shaped and the receiving groove (16) is in each case formed in the region of peripheral ends of the elongate hole (3, 103, 203; 4, 104, 204; 5, 105, 205) as a gap (21) with a height (H) between a shoulder (18; 118; 218) formed in the receiving groove (16) and a covering tongue (19), opposite the shoulder (18; 118; 218), of the receiving groove (16), wherein the screen insert (12; 112; 212) is able to be positioned so as to be bent in a manner matched to a radius of the elongate hole (3, 103, 203; 4, 104, 204; 5, 105, 205) with its outer edge (90; 190; 290), formed on peripherally end-side retaining tongues (22, 23), supported at least partially between the shoulder (18; 118; 218) and the covering tongue (19), wherein a thickness (D) of the retaining tongues (22, 23) is less than the height (H) of the gap (21) such that the retaining tongues (22, 23) are fixed in a form-fitting manner between the covering tongue (19) and the shoulder (18; 118; 218) with the aid of static friction.

2. Cartridge valve according to Patent Claim 1,
**characterized in that**
the receiving groove (16) is formed as a T-groove.

3. Cartridge valve according to either of the preceding patent claims,
**characterized in that**
the screen insert (12; 112; 212) has a frame (15; 115; 215) and a thin screen (20; 120; 220) which is held in the frame.

4. Cartridge valve according to Patent Claim 3,
**characterized in that**
the frame (15; 115; 215) is fixed in the elongate hole (3, 103, 203; 4, 104, 204; 5, 105, 205).

5. Cartridge valve according to either of Patent Claims 3 and 4,
**characterized in that**
the frame (15; 115; 215) has, at its frame ends, which are able to be positioned so as to face the peripheral ends of the elongate hole (3, 103, 203; 4, 104, 204; 5, 105, 205), in each case the retaining tongue (22, 23).

6. Cartridge valve according to one of Patent Claims 3 to 5,
**characterized in that**
the screen is formed as an etched or punched metal sheet.

7. Cartridge valve according to one of the preceding patent claims,
**characterized in that**
the shoulder (18; 118; 218) is additionally provided on length sides (24) of the elongate hole (3, 103, 203; 4, 104, 204; 5, 105, 205), on which the screen insert (12; 112; 212) is mounted.

8. Cartridge valve according to one of the preceding claims,
**characterized in that**
the shoulder (18; 118; 218) is of closed encircling form.

9. Cartridge valve according to one of Patent Claims 3 to 8,
**characterized in that**
the frame (15; 115; 215) is a plastic injection-moulded part by which the screen (20; 120; 220) is encapsulated at the outer edge (90; 190; 290) thereof.

10. Cartridge valve according to one of Patent Claims 3 to 9,
**characterized in that**
at least one position-retaining web (89; 189) extends from the frame (15; 115) radially outwardly.

11. Cartridge valve according to one of Patent Claims 3 to 9,
**characterized in that**
at least one clamping lug (30) extends from the frame (115; 215) parallel to the longitudinal axis (6) .

12. Cartridge valve according to one of the preceding patent claims,
**characterized in that**
multiple elongate holes (3, 4, 5; 103, 104, 105; 203, 204, 205) which follow one another axially with respect to the longitudinal axis (6) of the hydraulic sleeve (2; 102; 202) are arranged offset from one another in the periphery of the hydraulic sleeve (2; 102; 202).

## Revendications

1. Valve à cartouche, présentant une douille hydraulique (2 ; 102 ; 202) qui présente au moins un raccord (P ou A ou B) qui est réalisé sous la forme d'un trou oblong (3, 103, 203 ; 4, 104, 204 ; 5, 105, 205) s'étendant dans la direction périphérique par rapport à un axe longitudinal (6) de la douille hydraulique (2 ; 102 ; 202) et qui est protégé au moyen d'un insert de filtre (12 ; 112 ; 212) inséré dans le trou oblong (3, 103, 203 ; 4, 104, 204 ; 5, 105, 205), le trou oblong (3, 103, 203 ; 4, 104, 204 ; 5, 105, 205) présentant une rainure de réception (16) réalisée au moins en partie sur la périphérie du trou oblong (3, 103, 203 ; 4, 104, 204 ; 5, 105, 205), **caractérisée en ce que** le trou oblong (3, 103, 203 ; 4, 104, 204 ; 5, 105, 205) est prévu en forme de croissant et la rainure de réception (16) est à chaque fois réalisée dans la région d'extrémités périphériques du trou oblong (3, 103, 203 ; 4, 104, 204 ; 5, 105, 205) sous forme de fente (21) de hauteur (H) entre un épaulement (18 ; 118 ; 218) réalisé dans la rainure de réception (16) et une langue de recouvrement (19) de la rainure de réception (16) opposée à l'épaulement (18 ; 118 ; 218), l'insert de filtre (12 ; 112 ; 212) pouvant être positionné sous forme cintrée de manière adaptée à un rayon du trou oblong (3, 103, 203 ; 4, 104, 204 ; 5, 105, 205), avec son arête extérieure (90 ; 190 ; 290) réalisée au niveau de langues de retenue (22, 23) du côté de l'extrémité sur la périphérie s'appuyant au moins en partie entre l'épaulement (18 ; 118 ; 218) et la langue de recouvrement (19), une épaisseur (D) des langues de retenue (22, 23) étant inférieure à la hauteur (H) de la fente (21) de telle sorte que les langues de retenue (22, 23) puissent être fixées par adhérence par friction par engagement par correspondance de formes entre la langue de recouvrement (19) et l'épaulement (18 ; 118 ; 218) .

2. Valve à cartouche selon la revendication 1,
**caractérisée en ce que**
la rainure de réception (16) est réalisée sous forme de rainure en T.

3. Valve à cartouche selon l'une quelconque des revendications précédentes,
**caractérisée en ce que**
l'insert de filtre (12 ; 112 ; 212) présente un cadre (15 ; 115 ; 215) et un filtre mince (20 ; 120 ; 220) reçu dans le cadre.

4. Valve à cartouche selon la revendication 3,
**caractérisée en ce que**
le cadre (15 ; 115 ; 215) est fixé dans le trou oblong (3, 103, 203 ; 4, 104, 204 ; 5 105, 205).

5. Valve à cartouche selon l'une quelconque des revendications 3 ou 4,
**caractérisée en ce que**
le cadre (15 ; 115 ; 215) présente dans chaque cas la langue de retenue (22, 23) au niveau de ses extrémités de cadre pouvant être positionnées de manière tournée vers les extrémités périphériques du trou oblong (3, 103, 203 ; 4, 104, 204 ; 5, 105, 205).

6. Valve à cartouche selon l'une quelconque des revendications 3 à 5,
**caractérisée en ce que**
le filtre est réalisé sous forme de tôle gravée ou estampée.

7. Valve à cartouche selon l'une quelconque des revendications précédentes,
**caractérisée en ce que**
l'épaulement (18 ; 118 ; 218) est en outre prévu sur des côtés longitudinaux (24) du trou oblong (3, 103, 203 ; 4, 104, 204 ; 5, 105, 205) sur lesquels est posé l'insert de filtre (12 ; 112 ; 212).

8. Valve à cartouche selon l'une quelconque des revendications précédentes,
**caractérisée en ce que**
l'épaulement (18 ; 118 ; 218) est réalisé sous forme fermée sur la périphérie.

9. Valve à cartouche selon l'une quelconque des revendications 3 à 8,
**caractérisée en ce que**
le cadre (15 ; 115 ; 215) est une pièce moulée par injection de plastique avec laquelle le filtre (20; 120 ; 220) est surmoulé au niveau de son arête extérieure (90 ; 190 ; 290).

10. Valve à cartouche selon l'une quelconque des revendications 3 à 9,
**caractérisée**
**en ce qu'**au moins une nervure de retenue de position (89 ; 189) s'étend radialement vers l'extérieur depuis le cadre (15 ; 115).

11. Valve à cartouche selon l'une quelconque des revendications 3 à 9,
**caractérisée**
**en ce qu'**au moins une patte de serrage (30) s'étend parallèlement à l'axe longitudinal (6) à partir du cadre (115 ; 215).

12. Valve à cartouche selon l'une quelconque des revendications précédentes,
**caractérisée en ce que**
plusieurs trous oblongs (3, 4, 5 ; 103, 104, 105 ; 203, 204, 205) axialement successifs par rapport à l'axe longitudinal (6) de la douille hydraulique (2 ; 102 ; 202) sont disposés de manière décalée les uns par rapport aux autres sur la périphérie de la douille hydraulique (2 ; 102 ; 202).
